## Europäisches Patentamt

## European Patent Office

## Office européen des brevets

(11) Veröffentlichungsnummer: **0 150 045**
**B1**

# (12) EUROPÄISCHE PATENTSCHRIFT

(45) Veröffentlichungstag der Patentschrift:
21.09.88

(21) Anmeldenummer: **85100422.6**

(22) Anmeldetag: **17.01.85**

(51) Int. Cl.⁴: **B 23 Q 9/00**

(54) **Führungsanschlag.**

(30) Priorität: **21.01.84 DE 8401760 U**

(43) Veröffentlichungstag der Anmeldung:
**31.07.85 Patentblatt 85/31**

(45) Bekanntmachung des Hinweises auf die Patenterteilung:
**21.09.88 Patentblatt 88/38**

(84) Benannte Vertragsstaaten:
**AT BE FR GB LU NL SE**

(56) Entgegenhaltungen:
**US-A-2 522 803**
**US-A-2 635 655**
**US-A-3 893 372**
**US-A-3 893 372**

(73) Patentinhaber: **Black & Decker Overseas AG,
Staedtle 36, FL- 9490 Vaduz (LI)**

(72) Erfinder: **Bergler, Otto, Jahnstrasse 18/1, D-7130
Mühlacker- Lomersheim (DE)**

(74) Vertreter: **Wilhelm, Hans- Herbert, Dr.- Ing.,
Wilhelm & Dauster Patentanwälte
Hospitalstrasse 8, D-7000 Stuttgart 1 (DE)**

## Beschreibung

Die Erfindung betrifft einen Führungsanschlag nach dem Oberbegriff des Anspruches 1.

Es ist entsprechend diesem Oberbegriff bekannt (US 3 893 372 A), an beweglichen Bearbeitungsgeräten wie beispielsweise Handhobeln oder Handfräsgeräten oder an mit diesen Bearbeitungsgeräten verbundenen Halterungen Anschläge vorzusehen, die an das zu bearbeitende Werkstück angelegt werden. Hierbei wird das Werkstück im gewissen Sinn selbst zur Führung des Bearbeitungsgeräts benutzt, da für dieses Gerät keine andere, vom Werkstück unabhängige Führung eingesetzt wird. Bei diesen Bauarten sind Anschlagplatten vorgesehen, die schwenkbar an Klemmachsen gehalten sind, die an seitlich vom Gehäuse des Bearbeitungsgerätes abstehenden Tragarmen angebracht sind. Eine solche Führung ist für genaueres Arbeiten nicht einsetzbar, weil der Abstand des Bearbeitungsgerätes zu der zu bearbeitenden Fläche wegen der Anordnung der Tragarme groß ist und nachteilige Schwingungen zu befürchten sind. Das Bearbeitungsgerät läßt sich zur Einstellung des Werkzeuges auch nur um die Klemmachsen verschwenken und kann nur an Kanten eines Werkstückes, aber nicht an dessen Stirnseiten geführt werden.

Bekannt ist auch eine Führungseinrichtung für Schneidklingen (US 2 522 803 A), mit denen Holz geschnitz werden soll. Diese Einrichtung besteht aus zwei Bügeln, die an einer gemeinsamen Achse schwenkbar angeordnet sind und mit je einem Klemmarm, der ein Langloch aufweist, mit einem zentral an der gemeinsamen Achse über ein Langloch verschiebbaren Haltearm fest verbindbar sind, der die Schneidklinge trägt. Diese Einrichtung erlaubt nur die zentrale Bearbeitung zwischen den Führungsflächen der Bügel. Eine Verschiebung des Werkzeuges quer dazu ist ebenso wie ein seitliches Auseinanderschieben der Führungsflächen nicht möglich. Die Stabilität dieser Führung ist auch nicht groß.

Die Erfindung hat sich die Aufgabe gestellt, einen Führungsanschlag der eingangs genannten Art so auszubilden, daß eine sichere Führung des Bearbeitungsgeräts auch an Werkstücken von unterschiedlichem Profil möglich ist. Diese Aufgabe wird bei einer Führungseinrichtung der eingangs genannten Art durch die kennzeichnenden Merkmale des Anspruches 1 gelöst. Hierdurch ergibt sich eine sehr sichere, aber variierbare Führung. Da die Anschlagplatten schwenkbar sind, können sie an Werkstücke von nahezu beliebigem Profil angelegt werden. Beispielsweise ist es möglich, wenn sie an zwei gegenüberliegenden Seiten des Werkstücks angelegt werden, die zwischen diesen Seiten liegende Stirnseite mit dem Bearbeitungsgerät zu bearbeiten, beispielsweise zu profilieren. Es ist auch möglich, die Anschlagplatten an zwei aneinanderstoßende Seiten des Werkstücks anzulegen; dann kann das Werkstück im Bereich der diesen beiden Seiten gemeinsamen Kante bearbeitet werden.

Vorteilhaft ist es, daß das Bearbeitungsgerät universell eingesetzt werden kann. Seine Lage kann nämlich durch Verschieben an der Stange gegenüber dem Werkstück verändert werden. Vorteilhaft kann auch die Halterung, die an dieser Stange verschiebbar ist, zweiteilig ausgebildet werden, so daß auch der Abstand der durch die Kulissenführungen gegebenen Schwenkachsen für die Anschlagplatten verstellbar ist.

Weitere Merkmale und Vorteile der Erfindung ergeben sich aus den Unteransprüchen sowie aus der Beschreibung zur Zeichnung, in der eine bevorzugte Ausführungsform der Erfindung dargestellt ist. Es zeigen:

Fig. 1 die schematische Ansicht eines mit einem erfindungsgemäßen Führungsanschlag ausgerüsteten Bearbeitungsgeräts während des Bearbeitungsvorgangs und

Fig. 2 die Bearbeitung eines anders profilierten Werkstücks mit einer anderen Stellung der Anschlagplatten.

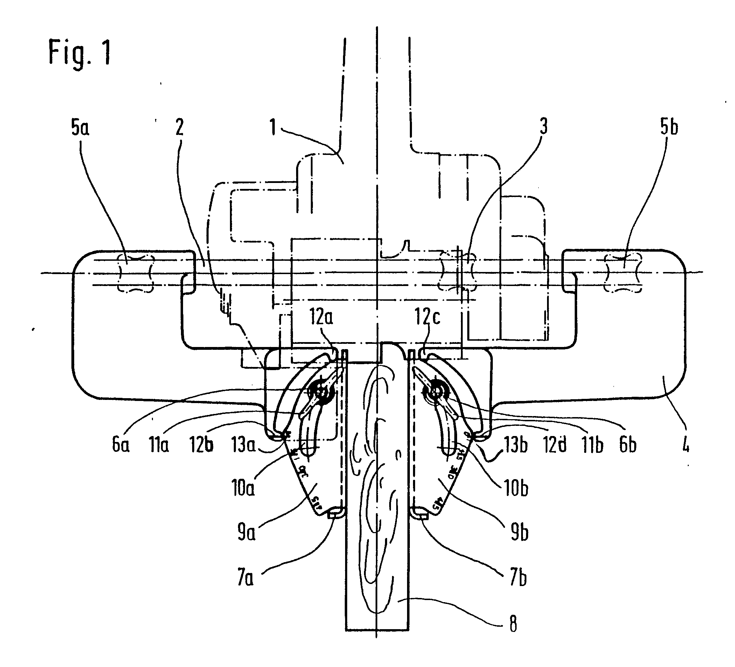

Ein Bearbeitungsgerät, beispielsweise ein Handhobel oder ein Fräsgerät, ist in der Fig. 1 nur schematisch angedeutet und mit 1 bezeichnet. Dieses Bearbeitungsgerät besitzt eine Bohrung o. dgl., durch die eine Stange 2 gesteckt ist. Das Bearbeitungsgerät kann längs dieser Stange verschoben und auf dieser mittels einer Knebelschraube 3 festgelegt werden.

Die Stange 2 ist ferner durch die Öffnungen einer Halterung 4 gesteckt. Auch diese Halterung kann gegenüber der Stange 2 festgelegt werden, hier ebenfalls durch Knebelschrauben 5a und 5b. An dieser Halterung befestigt sind Achsen 6a und 6b.

Zwei Anschlagplatten sind mit 7a und 7b bezeichnet. Diese Anschlagplatten liegen auf den Oberflächen eines Werkstücks 8 an. Mit den Anschlagplatten verbunden sind jeweils weitere Platten 9a und 9b. Diese weiteren Platten weisen Kulissenführungen 10a und 10b auf, durch welche die Achsen 6a und 6b ragen. Auf ein am äußeren Ende dieser Achsen aufgeschnittenes Gewinde sind Flügelmuttern 11a und 11b aufgeschraubt.

Die Anschlagplatten 7a und 7b können nun, wenn die Flügelmuttern gelöst sind, gegenüber der Halterung verschwenkt werden, so daß sie auch an unterschiedlich profilierte Werkstücke angelegt werden können. Sie werden dann durch Anziehen der Flügelmuttern 11a und 11b festgelegt, wobei sich ein Reibschluß zwischen diesen Flügelmuttern und den Platten 9a und 9b ergibt. An der Halterung 4 vorgesehene Nasen 12a bis 12d sorgen für einen sicheren Halt der Platten 9a und 9b und damit auch der Anschlagplatten 7a und 7b. Zugleich führen sie die Platten 9a und 9b auch während des Verschwenkens. Der mögliche Schwenkwinkel der Anschlagplatte wird durch an den weiteren Platten 9a und 9b vorgesehene Vorsprünge oder Nasen 13a und 13b begrenzt Außerdem ist es möglich, an den Platten 9a und 9b, wie gezeigt, Skalierungen anzubringen, die den jeweils gerade gewählten Schwenkwinkel der Anschlagplatten anzeigen.

Natürlich können an jeder Anschlagplatten 7a und 7b auch mehrere weitere Platten angebracht sein. Die Achsen 6a und 6b ragen dann durch mehrere Kulissenführungen. Dies ergibt eine bessere Halterung der Anschlagplatten. Im Ausführungsbeispiel sind jeder Anschlagplatte zwei weitere Platten zugeordnet, doch ist aus Darstellungsgründen jeweils nur eine dieser weiteren Platten sichtbar.

Die Lage des Bearbeitungsgeräts 1 gegenüber der Halterung 4 läßt sich dadurch verändern, daß die Knebelschraube 3 gelöst und das Bearbeitungsgerät dann längs der Stange 2 verschoben wird. Anschließend wird die Knebelschraube wieder zugedreht.

Die beiden Anschlagplatten 7a und 7b ermöglichen eine sehr sichere Führung des Bearbeitungsgeräts an dem Werkstück 8, da das Bearbeitungsgerät im wesentlichen nur in Vorschubrichtung bewegt werden kann. Da das Bearbeitungsgerät auch gegenüber der Halterung verstellbar ist, können in beliebiger Weise beispielsweise Profile gefräst werden.

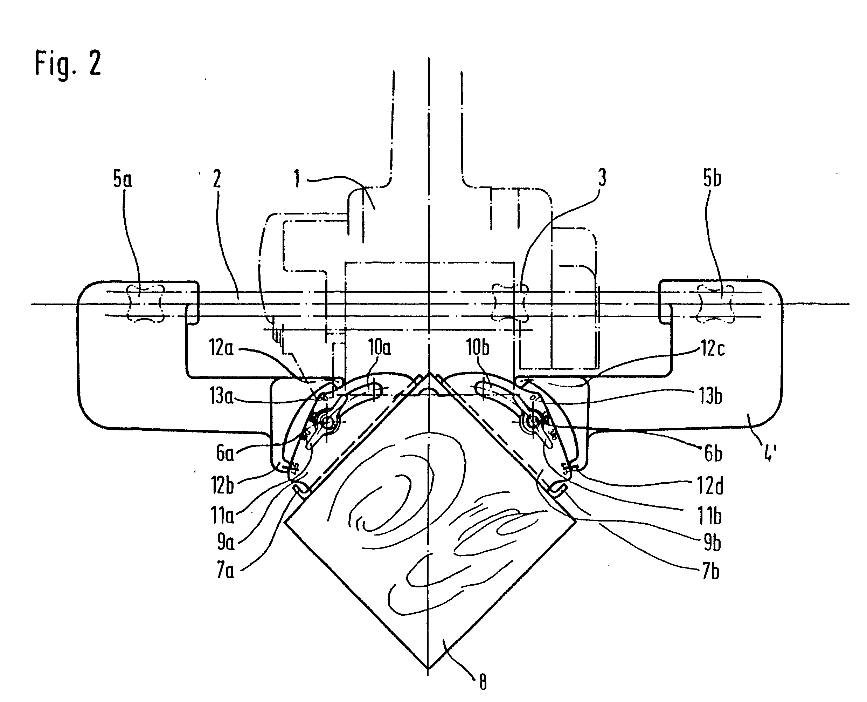

Eine andere Arbeitsposition der Anschlagplatten 7a und 7b zeigt die Fig. 2. Das Werkstück weist dort ein anderes Profil auf, und außerdem soll nicht eine Seitenfläche des Werkstücks bearbeitet werden, sondern, wie gezeigt, eine Kante. Die Anschlagplatten 7a und 7b sind hierbei gegenüber der Position der Fig. 1 verschwenkt und nehmen mit der Horizontalen einen Winkel von 45° ein.

Abgesehen von der gemäß Fig. 2 etwas breiter ausgeführten Halterung, die dort mit 4' bezeichnet ist, entsprechen die in der Fig. 2 gezeigten Teile im übrigen der Fig. 1. Das andere Werkstück ist mit 8' bezeichnet.

## Patentansprüche

1. Führungsanschlag zur Führung eines Bearbeitungsgeräts, insbesondere eines Handhobel- oder Fräsgeräts, bestehend aus zwei mit dem Bearbeitungsgerät (1) verbundenen, schwenkbaren, in ihrer jeweiligen Winkelposition festlegbaren und an ein Werkstück (8, 8') anlegbaren Anschlagplatten (7a, 7b), die einen Winkel von weniger als 180° miteinander einschließen, dadurch gekennzeichnet, daß die Anschlagplatten (7a, 7b) jeweils mit mindestens einer senkrecht zu ihnen stehenden weiteren Platte (9a, 9b) o. dgl. versehen sind, in die je eine Kulissenführung (10a, 10b) eingearbeitet ist, die schwenkbar an einer Halterung (4, 4') angebracht sind, die ihrerseits auf einer Stange (2) festlegbar ist, an der auch das Bearbeitungsgerät (1) längsverschiebbar gehalten ist.

2. Führungsanschlag nach Anspruch 2, dadurch gekennzeichnet, daß für jede Anschlagplatte (7a, 7b) mindestens ein Gewindebolzen (6a, 6b) o. dgl. vorgesehen ist, der durch die jeweilige Kulissenführung (10a, 10b) ragt und auf den jeweils eine Mutter, insbesondere eine Flügelmutter (11a, 11b) aufgeschraubt ist.

3. Führungsanschlag nach Anspruch 1 oder 2, dadurch gekennzeichnet, daß die mit dem Bearbeitungsgerät (1) verbundene Halterung (4, 4') Nasen (12a - 12d) o. dgl. aufweist, die an den weiteren Platten (9a, 9b) anliegen.

4. Führungsanschlag nach Anspruch 3, dadurch gekennzeichnet, daß die weiteren Platten (9a, 9b) ebenfalls mit Nasen (13a, 13b) Vorsprüngen o. dgl. versehen sind.

## Claims

1. Guide member for guiding a tool, in particular a hand plane or milling cutter, consisting of two pivotal stop plates (7a, 7b) which are connected to the tool (1) and can be fixed in the required angular position and, placed in contact with a work piece (8, 8'), which stop plates enclose an angle of less than 180°, characterised in that the stop plates (7a, 7b) are each provided with at least one other plate (9a, 9b) or the like perpendicular to the first mentioned plate, each of which other plates (9a, 9b) has a guide slot (10, 10b) formed therein and is pivotally mounted on a support (4, 4') which in turn can be fixed on a rod (2) on which the tool is also longitudinally displaceable.

2. Guide member according to claim 2, characterised in that at least one threaded pin (6a, 6b) or the like is provided for each stop plate (7a, 7b), said pins projecting through the respective guide slots (10, 10b) and carrying each a nut, particular a wing nut (11a, 11b).

3. Guide member according to claim 1 or claim 2, characterised in that the support (4, 4') connected with the tool (1) has lugs (12a - 12d) or the like which bear against the other plates (9a, 9b).

4. Guide member according to claim 3, characterised in that the other plates (9a, 9b) also have lugs (13, 13b), projections or the like.

## Revendications

1. Butée de guidage pour le guidage d'un appareil d'usinage, en particulier un rabot ou une fraiseuse à main, se composant de deux plaques de butée (7a et 7b) liées à l'appareil d'usinage (1,) pouvant pivoter et être fixées dans chacune de leurs positions angulaires et réglables par rapport à une pièce à usiner (8, 8') et qui sont incluses dans un angle inférieur à 180°, caractérisé en ce que les plaques de butée )7a et 7b) sont munies chacune d'une des plaques plus larges (9a, 9b) ou analogues placée perpendiculairement à la plaque de butée dans chacune desquelles est usiné un guidage coulissant (10a, 10b) qui sont disposés de façon à pouvoir pivoter sur un support (4, 4') qui, de son côté, peut être fixé sur une tige 2 sur laquelle est maintenu aussi l'appareil d'usinage (1).

2. Butée de guidage selon la revendication 1, caractérisée en ce que, *pour chaque plaque* de butée (7a, 7b,) est prévu au moins un goujon fileté 6a, 6b ou analogue qui fait saillie de chaque guidage coulissant (10a, 10b) et sur chacun desquels est vissé un écrou, en particulier un écrou à oreilles (11a, 11b).

3. Butée de guidage selon la revendication 1 ou la revendication 2, caractérisé en ce que le support (4, 4') lié à l'appareil d'usinage 1 comporte des becs (12a-12d) ou analogues qui se situent sur les plaques plus larges (9a, 9b).

4. Butée de guidage selon la revendication 3, caractérisée en ce que les plaques plus larges (9a, 9b) sont munies de la même manière de becs (13a, 13b), de protubérances ou analogues.

Fig. 1

Fig. 2